# EUROPEAN PATENT APPLICATION

(11) **EP 4 113 763 A1**
(43) Date of publication of application: **04.01.2023**
(21) Application number: 21192715.7
(22) Date of filing: 24.08.2021
(51) Int. Cl.: H02G 3/04, H02G 3/06

(54) **CABLE TRAY COUPLING**

(30) Priority: 30.06.2021 SI 202100133
(71) Applicant: HERMI, d.o.o., 3000 Celje (SI)
(72) Inventor: Stvarnik, Bostjan, 3320 Velenje (SI)
(74) Representative: Golmajer Zima, Marjanca

(57) **Abstract**

A cable tray formed in a U-shape having a base side and two lateral sides, comprises a first connecting end and a second connecting end, wherein the second connecting end on a respective lateral side comprises an elongate lateral push-in member extending parallel to the edge of a respective lateral side and being complementary to an elongate lateral cut-out arranged on a respective lateral side of a first connecting end and parallel to an end edge of a respective lateral side; a second elongate lateral push-in member extending perpendicularly to the elongate lateral push-in member and to the edge of a respective lateral side and being complementary to a corner cut-out arranged in the area where the base side and a respective lateral side of the first connecting end bend, the height H of the corner cut-out on the lateral side being substantially identical to a distance h of the upper edge of the second elongate lateral push-in member from the fold.

## Description

### Subject of Invention

The subject of the invention is a cable tray combinable with a second cable tray by insertion from above to form a cable guiding arrangement for receiving surface-mounted cables in a building.

### Technical Problem

The technical problem is how to configure a cable tray that will allow quick, easy and above all reliable assembly to a cable guiding arrangement, without additional connecting elements and without the use of any tools, while ensuring sufficient connection strength even with largest cable trays with heavy loads.

### Prior Art

A cable tray is an integral element of a cable guiding arrangement on which a variety of cables are arranged for surface-mounted installation inside a building. A cable guiding arrangement protects the cables from damage, allows for their neat organization and contributes to the aesthetic appearance of the building. As a rule, cable guiding arrangements are installed under the ceiling in as concealed places as possible and thus also in hard-to-reach places. The basic element of a cable guiding arrangement is a cable tray that has a U-shape with a base side and two lateral sides that extend along the base side and perpendicularly thereto. By combining or assembling several cable trays together, a cable guiding arrangement of any length is formed. Cable trays are assembled by way of longitudinal insertion so that one cable tray is pushed longitudinally towards another cable tray or by vertical insertion so that one cable tray is pushed into another cable tray in the vertical direction, i.e. perpendicularly to their longitudinal direction. The disadvantage of the longitudinal insertion is the requirement for additional space in the longitudinal direction. Cable trays require quick installation to achieve a stable, solid and reliable bond between adjacent cable trays. Quick installation which shortens the installation time is an advantage for both the contractor and the client. Despite the rapid assembly of a cable guiding arrangement, it must be stable and reliable, but at the same time it must also provide sufficient load-bearing capacity. The speed of installation is achievable by using cable trays which do not require many components to be assembled to a cable guiding arrangement, especially screws, rivets or various clamps, which fix two cable trays to each other. The size of a cable tray, i.e. the width and height, depends on the number of cables to be accommodated in a cable guiding arrangement. The width of a cable tray can be up to 600 mm and the height 60-100 mm. In particular, wider cable trays are exposed to high loads due to the large cable weight and consequently also to deformations; a cable tray tends to bend especially in the longitudinal direction. The load-bearing capacity of a cable tray can be adjusted with the material, with mostly metal material, mainly sheet metal, being used for the cable trays. So, especially in the case of cable trays or cable guiding arrangements of larger dimensions, the cable tray often tends to bend in the longitudinal direction. Such bending can result in the cable trays getting open and detached from one another. Bending of the base surface causes the lateral sides to move and the push-in elements arranged on the lateral sides to get detached. As a result, the cable guiding arrangement can get damaged or even destructed.

EP1675231 A1 (Jordan et al) discloses a cable tray for forming a cable guiding arrangement that is provided at one end with push-in straight members with notches and provided at the other end with locking convex members, into which the push-in straight members with notches snap. The locking convex members receive the straight push-in members with notches of a second cable tray so as to form a cable guiding arrangement. In order to allow for a relatively simple insertion of a push-in member into the locking member, the latter must be made precisely and, above all, with sufficient clearance. As a result, the bond between the adjacent cable trays is not fixed. Therefore, each push-in connection is fixed by means of a special elastic element equipped with fastening clamps. Assembling such cable trays is time-consuming and impractical due to the additional elements that need to be inserted into the notches, especially in hard-to-reach places. To ensure the mutual fixing of the cable trays, the elastic strength of the elastic elements must be quite high, which further complicates the work.

EP 2501972 A1 (Malcok) describes a cable tray provided at one end to be inserted into the other end in lateral sides with a knee-shaped gap into which a nut-shaped connection means is inserted, which is attached to the inner lateral side of the first end of the cable tray. The knee-shaped gap prevents direct vertical movement of the cable tray or of the other end of the other cable tray, however the knee-shaped gap/connection means is quite loose so that the connection means can be inserted into the knee-shaped gap. The connection is then fixed with a screw that is screwed into the nut from the outside. At the same time, reinforcing ribs are arranged at the same end of the cable tray, which should provide greater strength of the lateral portion and thus prevent spreading apart. A disadvantage of the described solution is protrusions in the form of nuts and reinforcing ribs, which can damage the cables during their installation on the cable tray. This type of assembling two cable trays requires a lot of precision and a relatively large amount of space in the vertical direction, which is always lacking.

There are also solutions in which the strength of the lateral sides and the reduction in bending at higher loads, thus reducing the possibility of detachment, are solved with reinforcing ribs arranged along the base surface of a cable tray. Even in these cases, a disadvantage is the uneven inner surface of the cable tray, which can lead to damage to the cable itself.

### Solution to the Technical Problem

The technical problem is solved by a cable tray having the characteristic as defined in claim 1.

The main feature of the cable tray according to the invention is that a second connecting end on a respective lateral side comprises an elongate lateral push-in member extending parallel to the edge of a respective lateral side and being complementary to an elongate lateral cut-out arranged on a respective lateral side of a first connecting end and parallel to an end edge of a respective lateral side; a second elongate lateral push-in member extending perpendicularly to the elongate lateral push-in member and to the edge of a respective lateral side and being complementary to a corner cut-out arranged in the area where the base side and a respective lateral side of the first connecting end bend, the height H of the corner cut-out on the lateral side being substantially identical to a distance h of the upper edge of the second elongate lateral push-in member from the fold.

The cable tray further comprises at least one large cut-out at the first connecting end, preferably two cut-outs arranged in the base side, and a lateral large cut-out arranged on a respective lateral side.

At the second connecting end, the cable tray comprises at least one flap, preferably two flaps, arranged in the base side and complementary to the two large sections of the first connecting end, and a lateral flap arranged on a respective lateral side complementary to the lateral large section of the first connecting end.

Each flap has the shape of a tab formed by punching, and can be bent downwards by substantially 180° through a complementary cut-out. Each flap has a cut-out at the tab root.

The lateral flap comprises a second safety cut-out which is, in the state when the lateral flap is bent upwards, complementary to a first safety cut-out arranged at the first connecting end above the lateral large cut-out, and to a third safety cut-out arranged at the second connecting end above the lateral flap. The safety cut-outs are configured to receive a coupling element, the coupling element being in the form of a screw with a nut or any other known coupling element.

The push-in members are formed by punching a sheet metal and are convex on the outer surface of the base side or the outer surface of a respective lateral side.

The cable tray is made of a metallic material such as sheet metal, the sheet metal being electrically conductive.

The cable tray according to the invention has connecting elements which, regardless of the load on the cable tray, prevent the connecting elements that connect the cable trays with each other from getting detached. It is suitable for cable trays of all dimensions, from the smallest to the largest without any additional elements. This is particularly advantageous from a production point of view as no additional tools are required to manufacture different dimensions of cable trays. The mounting and assembly of cable trays according to the invention is carried out by joining two cable trays in the vertical direction, which does not require additional space, which is often lacking. Assembling the cable guiding arrangement is quick and easy, and above all, it does not require any additional tools nor even a screwdriver, as all push-in members can be bent or inserted into a suitable cut-out with the user's free hand. All the elements that perform the mutual fixing of the two cable trays are formed either in the plane of the inner surfaces of the cable tray or on the outer side of the cable tray. Any damage to a cable is herewith prevented.

The connecting elements are formed in such a way that a respective convex or folded part is directed outwards from the cable tray, while the inner side of the cable tray remains empty and the inner surfaces of the base side and lateral sides are smooth and devoid of protrusions.

The connecting elements which are arranged on the base surface and a respective lateral side provide for an excellent galvanic connection of the cable trays that form the cable guiding arrangement.

The cable tray of the invention will be described hereinbelow in more detail by way of an embodiment and a drawing representing in

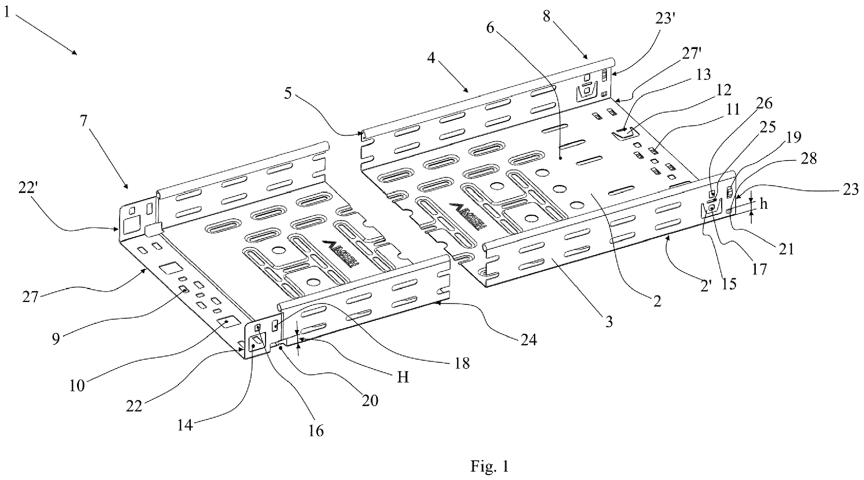

Fig. 1 Cable tray of the invention, perspective view.

The relative expressions such as upper, lower, inner, outer etc. are herein defined from the perspective of the cable tray being mounted in a building, i.e. when it is in an operable state.

A cable tray 1 produced of sheet metal is formed in a U-shape with a base side 2 and two lateral sides 3, 4 that extend along the base side 2 and perpendicularly thereto. An upper free edge 5 of a respective lateral side 3, 4 is folded into the interior 6 of the cable tray 1, wherein at one free end of the cable tray 1, i.e. a first connecting end 7, one part of the folded edge 5 is cut off. The cable tray 1 has a first connecting end 7 and a second connecting end 8, which are connecting sections by which each cable tray 1 is connected to a second cable tray 1' to form a cable guiding arrangement. The first connecting end 7 and the second connecting end 8 are of equal lengths, their lengths being equal to the length of the cut-off part of the folded edge 5 and this length is always less than half the length of the cable tray 1. When forming the cable guiding arrangement, the first connecting end 7 of a first cable tray 1 receives the second connecting end 8 of a second cable tray 1' in a way that the second connecting end 8 of the second cable tray 1' is pushed perpendicularly to the first cable tray 1 into the first connecting end 7 of the first cable tray 1. In the area of the first connecting end 7, the cable tray 1 is bent along the entire base side 2 and both lateral sides 3, 4 so that the entire first connecting end 7 is extended by the thickness of the sheet metal, of which the cable tray 1 is made. Thanks to said extension, the surface of the base side 2 is flat even after the insertion of the second cable tray 1', it is without protrusions and, above all, without sharp edges that could damage the cable installed in the cable tray.

The first connecting end 7 has at least one and preferably more elongate cut-outs 9 in the base side 2, which extend parallel to an edge 27 of the base side 2. The second connecting end 8 has at least one, preferably more than one elongate push-in member 11 arranged in the base side 2. The elongate push-in members 11 are formed by punching the sheet metal and are formed in a convex manner on the outer surface 2' of the base side 2, extend parallel to an edge 27' of the base side 2 and are complementary to the elongate cut-outs 9 of the first connecting end 7. When the second connecting end 8 of the second cable tray 1' is placed into the first connecting end 7 of the first cable tray 1, the respective push-in member 11 engages the elongate cut-out 9. In this way, the cable trays 1, 1' are joined with each other, the transverse mutual displacement of the cable trays 1, 1' being prevented by the push-in member 11 contacting the longitudinal sides of the elongate cut-out 9.

In the cable guiding arrangement, the first connecting end 7 of the first cable tray 1 and the second connecting end 8 of the second cable tray 1' are interconnected and fixed on a respective lateral side 3, 4 with complementary connecting elements 18, 19. A respective lateral side 3, 4 of the second connecting end 8 has in the upper portion closer to an end edge 23, 23' of a respective lateral side 3, 4, an elongate lateral push-in member 19 formed by punching the sheet metal and is convex on the outer surface 3', 4' of a respective lateral side 3, 4 and extends parallel to the edge 23, 23' of a respective lateral side 3, 4. The elongate lateral push-in member 19 is complementary to the elongate lateral cut-out 18 arranged on a respective lateral side 3, 4 of the first connecting end 7 in its upper portion which is distant from an end edge 22, 22' of a respective lateral side 3, 4 and parallel therewith. The elongate lateral push-in member 19, when inserted in the complementary cut-out 18, joins the lateral sides 3, 4 of the two cable trays 1, 1' to each other, prevents them from displacing in the longitudinal direction and prevents or at least reduces the possibility of the cable trays 1, 1' from getting detached from each other due to shear deformations.

In the lower portion of a respective lateral side 3, 4 of the second connecting end 8, which is closer to the end edge 23, 23' of the lateral side 3, 4, a second elongate lateral push-in member 21 is arranged so that it extends perpendicularly to the elongate lateral push-in member 19 and also perpendicularly to the edge 23, 23' of a respective lateral side 3, 4. The second elongate lateral push-in member 21 is complementary to a corner cut-out 20 arranged in the area of a fold 24 of the base side 2 and a respective lateral side 3, 4 of the first connecting end 7 in a way to extend into the base side 2 and a respective lateral side 3, 4 and is distant from the end edge 22, 22' of a respective lateral side 3, 4. The height H of the lateral portion of the corner cut-out 20 is substantially identical, preferably identical to a distance h of the upper edge of the second elongate lateral push-in member 21 from the fold 24. When the second connecting end 8 of the second cable tray 1' is pushed vertically down into the first connecting end 7, the second elongate lateral push-in member 21 snaps into the corner cut-out 20. This ensures the strength of the connection and at the same time prevents the cable trays from detaching from each other.

The form-locking connection thus formed between the second elongate lateral push-in member 21 and the corner cut-out 20 prevents the cable trays 1, 1' from detaching from each other even in the event of very high loads on large cable trays. The connection between the second elongate lateral push-in member 21 and the corner cut-out 20 is formed in an area of the cable tray where minimal deformations occur thanks to the high strength. In the event of high loads and thus bending deformations of the cable tray in the longitudinal and transverse directions, the force of the form-locking connection between the second elongate lateral push-in member 21 and the corner cut-out 20 is still further increased and the second lateral push-in member 21 cannot detach from the corner cut-out 20. Therefore, the cable tray of the invention thus configured is suitable for both small and large dimensions.

In addition to connecting elements 18, 19; 20, 21, the cable tray 1 further comprises connecting elements 10, 12; 14, 15, which are arranged on the base side 2 and a respective lateral side 3, 4. The first connecting end 7 has at least one, preferably two large cut-outs 10 arranged in the base side 2. The second connecting end 8 has at least one flap 12, preferably two flaps arranged in the base side 2, said flaps being complementary to the large cut-outs 10. Each flap 12 has the shape of a tab formed by punching, and is easily bent by hand, without the use of tools, downwards through the large cut-out 10. The flap 12 is folded downwards at an angle of substantially 180° so as to abut the outer surface 2'. Folding the flap 12 without the use of tools is possible due to a further cut-out 13 formed at the tab root. Folding the flaps 12 represents a further fixing of the two cable trays to each other.

The first connecting end 7 is provided on a respective lateral side 3, 4 on the portion closer to the end edge 22 of a respective lateral side 3, 4 with a lateral large cut-out 14, through which a lateral flap 15 is folded, which is arranged complementarily on the second connecting end 8 of a respective lateral side 3, 4 in the portion distant from the end edge 23, 23' of the lateral side 3, 4. The lateral flap 15, configured as a tab and formed by punching, is folded outwards through the lateral large cut-out 14 at an angle of substantially 180° so as to abut the outer lateral surface 3', 4' of the first connecting end 7. The lateral flap 15 is foldable simply by hand without the use of tools thanks to a further cut-out 25 formed at the tab root. The connection between two cable trays is still further fixed due to the lateral flap 15. In the event of huge loads and/or in the event of further securing the connection between two cable trays, the lateral flap 15 is provided with a second safety cut-out 17 which is, in the state when the lateral flap 15 is bent upwards, complementary to a first safety cut-out 16 arranged at the first connecting end 7 above the lateral large cut-out 14, and to a third safety cut-out 26 arranged at the second connecting end 8 above the lateral flap 15. A coupling element, e.g. a screw with a nut (not shown), is inserted through said safety cut-outs 16, 17, 25, which further prevents the second connecting end 8 from getting detached from the first connecting end 7.

The connecting elements large cut-out 10/flap 12 on the base surface 2 and lateral large cut-out 14/lateral flap 15 on a respective lateral side 3, 4 provide also for an excellent galvanic connection of the cable trays that form the cable guiding arrangement.

The connecting elements 9, 11; 18, 19; 20, 21; 10, 12; 14, 15 are formed in such a way that the convex or folded part is directed outwards from the cable tray, while the inner side 6 of the cable tray 1 remains empty and the inner surfaces of the base side and the lateral sides are smooth and devoid of protrusions.

## Claims

1. A cable tray formed in a U-shape having a base side and two lateral sides that extend along the base side and perpendicularly thereto and have a free edge bent towards the interior of the cable tray, comprises at one its free end a first connecting end with a cut-off free edge, with a knee-shaped extension, and with at least one elongate cut-out arranged in the base side of the first connecting end, and at its other free end a second connecting end with at least one elongate convex shaped push-in member that is arranged in the base side and perpendicularly inserted in the elongate cut-out of the first connecting end of a second cable tray when two cable trays are connected into a cable guiding arrangement,
**characterized in that** the second connecting end (8) comprises at a respective lateral side (3, 4)
an elongate lateral push-in member (19) extending parallel to an edge (23, 23') of a respective lateral side (3, 4) and being complementary to the elongate lateral cut-out (18) arranged on a respective lateral side (3, 4) of the first connecting end (7) and parallel to an end edge (22, 22') of a respective lateral side (3, 4),
a second elongate lateral push-in member (21) extending perpendicularly to the elongate lateral push-in member (19) and to the edge (23, 23') of a respective lateral side (3, 4) and being complementary to a corner cut-out (20) arranged in the area of a fold (24) of the base side (2) and a respective lateral side (3, 4) of the first connecting end (7), the height (H) of the corner cut-out (20) on the lateral side (3, 4) being substantially identical to a distance (h) of the upper edge of the second elongate lateral push-in member (21) from the fold (24).

2. The cable tray according to claim 1, **characterized in that** the first connecting end (7) comprises at least one, preferably two large cut-outs (10) arranged in the base side (2).

3. The cable tray according to any preceding claim, **characterized in that** the second connecting end (8) comprises at least one flap (12), preferably two flaps, arranged in the base side (2) and being complementary to two large cut-outs (10) of the first connecting end (7).

4. The cable tray according to any preceding claim, **characterized in that** the first connecting end (7) comprises a lateral large cut-out (14) arranged at a respective lateral side (3, 4).

5. The cable tray according to any preceding claim, **characterized in that** the second connecting end (8) comprises a lateral flap (15) arranged at a respective lateral side (3, 4) complementarily to the lateral large cut-out (14) of the first connecting end (7).

6. The cable tray according to any of claims 2 to 5, **characterized in that** the flap (12, 15) has the shape of a tab formed by punching, and can be bent downwards by substantially 180° through a complementary cut-out (10, 14).

7. The cable tray according to any of claims 2 to 6, **characterized in that** the flap (12, 15) has a cut-out (13, 25) at the tab root.

8. The cable tray according to claim 5, **characterized in that** the lateral flap (15) comprises a second safety cut-out (17) which is, in the state when the lateral flap (15) is bent upwards, complementary to a first safety cut-out (16) arranged at the first connecting end (7) above the lateral large cut-out (14), and to a third safety cut-out (26) arranged at the second connecting end (8) above the lateral flap (15).

9. The cable tray according to claim 8, **characterized in that** the safety cut-outs (16, 17, 25) are configured in a way to receive a coupling element.

10. The cable tray according to claim 9, **characterized in that** the coupling element is in the form of a screw with a nut.

11. The cable tray according to any preceding claim, **characterized in that** the push-in members (11, 19, 21) are formed by punching sheet metal and are convex on the outer surface (2') of the base side or the outer surface (3', 4') of a respective lateral side (3, 4).

12. The cable tray according to any preceding claim, **characterized by** being made of a metallic material such as sheet metal.

13. The cable tray according to claim 11, **characterized in that** the sheet metal is electrically conductive.
